# EUROPÄISCHE PATENTSCHRIFT

(11) **EP 1 890 041 B1**
(45) Veröffentlichungstag und Bekanntmachung des Hinweises auf die Patenterteilung: **18.11.2009**
(21) Anmeldenummer: 07013846.6
(22) Anmeldetag: 14.07.2007
(51) Int. Cl.: F04D 19/04, F04D 29/056, F16C 27/08, F16C 39/06

(54) **Anordnung zur Lagerung einer Welle einer Vakuumpumpe**
Assembly for supporting the shaft of a vacuum pump
Agencement destiné au support d'un arbre d'une pompe à vide

(30) Priorität: 09.08.2006 DE 102006037187
(43) Veröffentlichungstag der Anmeldung: 20.02.2008
(73) Patentinhaber: Pfeiffer Vacuum GmbH, 35614 Asslar (DE)
(72) Erfinder: Eilers, Martin, 35614 Asslar (DE); Rippl, Andreas, 35578 Wetzlar (DE); Rippl, Christopher Mark, 35578 Wetzlar (DE); Stoll, Tobias, 35719 Angelburg-Gönnern (DE)

(56) Entgegenhaltungen:
- EP-A- 0 976 938
- EP-A- 1 619 400
- GB-A- 2 173 867
- SU-A1- 406 048
- US-A- 3 950 964

## Beschreibung

Die Erfindung betrifft eine Anordnung zur Lagerung einer Welle einer Vakuumpumpe mit einem Gehäuse, mit einem ersten Lager, welches Kräfte in Richtung der Wellenachse erzeugt und eine axiale Steifigkeit besitzt, mit einem zweiten Lager, welches als Wälzlager ausgebildet ist und in einer Halterung mit axialer und radialer Steifigkeit angeordnet ist.

In Turbomolekularvakuumpumpen, kurz: Turbopumpen, erzeugt ein sich schnell drehender Rotor im Zusammenspiel mit einem Stator eine Pumpwirkung. Dieser Rotor muss gelagert werden, wobei verschiedene Methoden bekannt geworden sind. Eine kommerziell erfolgreiche Variante verwendet ein Wälzlager am vorvakuumseitigen und ein permanentmagnetisches Lager am hochvakuumseitigen Ende der Rotorwelle.

Dieses permanentmagnetische Lager ist aus ringförmigen, axial magnetisierten Permanentmagneten aufgebaut, wobei mehrere Magnetringe axial aufeinander gestapelt sind. In diesem Stapel sitzen die Magnetringe mit entgegengesetzter Polarität aufeinander. Zwei Stapel mit gleicher Stapelfolge der Polarität aber unterschiedlichem Durchmessern werden verwendet und je einer davon an Rotor und Stator angebracht. In der Normalposition sind die Magnetringe beider Stapel auf gleicher Höhe angeordnet, also konzentrisch und koplanar. Da in jeder Schicht des Stapels gleiche Polarität gegeben ist, beruht die Lagerung auf abstoßender Wirkung. Dies hat einen unerwünschten Nebeneffekt: Wird der Rotor in axialer Richtung belastet und aus der Normalposition ausgelenkt, verschieben sich die Ringe aus ihrer Normalposition. Durch die Abstoßung entstehen in dieser Situation zusätzliche axiale Kräfte. Diese Kräfte belasten in erheblichem Maße das vorvakuumseitige Wälzlager und dessen axiale Einbettung.

Die Belastung der vorvakuumseitigen Wälzlagers ist aus folgendem Grund kritisch: Das Lager muss, um die Übertragung von Vibrationen gering zu halten, schwingfähig im Gehäuse der Turbopumpe gehaltert sein. Damit stehen sich die Schwingungsfähigkeit einerseits aber die Widerstandsfähigkeit gegen axiale Kräfte andererseits als widersprüchliche Anforderungen gegenüber.

Jeder elastisch verformbaren Struktur kann eine Steifigkeit zugeordnet werden. Dies gilt für das permanentmagnetische Lager genauso wir für mechanische Bauelemente, beispielsweise für die Schwingringe. Im Falle des permanentmagnetischen Lagers lässt sich die Erzeugung der axialen Kraft bei Auslenkung aus der Normalposition über die Steifigkeit charakterisieren.

Das Wälzlager, bzw. seine Fassung, wurde bisher in elastomeren Materialien eingebettet, so dass die Schwingungsfähigkeit in axialer und radialer Richtung gegeben war. Den widersprüchlichen Anforderungen kann auf diese Weise aber nicht oder nur ungenügend Rechnung getragen werden. Zudem ist die Schwingungsfähigkeit in sehr hohem Maße vom elastomeren Material selbst abhängig.

Eine schwingfähige metallische Ankopplung für eine Vakuumpumpe schlägt die EP-A-1619400 vor, die als nächstliegender Stand der Technik angesehen wird. Der Außenring des Wälzlagers ist in einem segmentierten Ring gehaltert. Jedes Segment stützt sich über Platten im Gehäuse ab. Jede der Platten ist parallel zur Drehachse des Wälzlagers orientiert.

Eine metallische Ankopplung für eine Gasturbine zeigt die GB-A-2173867. Zwischen zwei Ringen sind drei Bogenfedern angeordnet, deren Enden jeweils mit einem der Ringe verbunden sind. Die Bogenfedern weisen eine große axiale Ausdehnung auf.

Eine Verbesserung des Prinzips nach GB-A-2173867 zeigt die EP-A-0976938. Die zwischen den Ringen und Bogenfedern vorliegenden Spalte werden durch Gehauseteile in axialer Richtung begrenzt. In den Spalten befindet sich Öl. Durch Öl und Begrenzung werden die Dämpfungseigenschaften eingestellt.

Aufgabe der Erfindung ist es daher, eine Anordnung zur Lagerung einer Welle vorzustellen, die insbesondere den widersprüchlichen Anforderungen genügt.

Gelöst wird diese Aufgabe durch eine Anordnung zur Lagerung einer Welle mit den Merkmalen des ersten Anspruches.

Die Halterung des Wälzlager weist eine Schwingbühne und eine Fixierung auf, wobei letztere die Verbindung zum Gehäuse darstellt. Schwingbühne und Fixierung sind mit metallischen Verbindungselementen miteinander verbunden, welche axiale und radiale Bewegungen erlauben. Der Vorteil dieser Halterung ist, dass alle die Lagegenauigkeit des Wälzlagers bestimmendenden Funktionen von den metallischen Elementen Schwingbühne, Fixierung und metallischen Verbindungselementen übernommen werden. Lageungenauigkeiten, die sich im Stand der Technik aus den großen Toleranzen der Elastomere ergeben und durch manuelle Justage ausgeglichen werden, spielen keine Rolle mehr. Damit entfällt der zeitaufwändige Justagevorgang. Zudem wird eine hohe Reproduzierbarkeit in der Serienfertigung erreicht, da sich die Fertigungsgenauigkeit moderner Werkzeugmaschinen in dem Metallkörper widerspiegelt. Die Abhängigkeit der Funktion der Halterung von den Materialien ist deutlich geringer als im Stand der Technik. Zusätzlich zu den metallischen Verbindungselementen werden Axialfedern eingesetzt. Dadurch wird die Steifigkeit der Halterung in axialer Richtung ist größer als die in radialer Richtung. Die Axialfeder und metallischen Verbindungselemente werden so dimensioniert, dass die axiale Steifigkeit der Halterung größer als die des ersten Lagers ist. Auf diese Weise ermöglicht es die Halterung, den oben genannten widersprüchlichen Anforderungen Rechnung zu tragen und einerseits die Belastung mit hohen axialen Kräften zu erlauben, ohne auf die Schwingfähigkeit in axialer und radialer Richtung zu verzichten. Ein weiterer Vorteil ist der geringe Bauraum, den die Halterung beansprucht. Darüber hinaus ist ein Vorteil, dass keine Veränderung der Eigenschaftenn der Halterung nach längerer Laufzeit und verschiedenen Lagertemperaturen auftritt.

Die Ansprüche 2 bis 8 stellen vorteilhafte Weiterbildungen der Erfindung dar. Inbesondere lassen sich die Vorteile der Erfindung nutzen, wenn das erste Lager ein permanentmagnetisches Lager ist, da solche Lager eine überdurchschnittliche Belastung des zweiten Lagers in axialer Richtung verursachen. Günstig ist die Anwendung dieser Lagerkombination in einer Turbomolekularvakuumpumpe, da diese zur Erzeugung sehr tiefer Drücke verwendet werden. Daher ist der Einsatz eines magnetischen Lagers auf der Hochvakuumseite vorteilhaft, wobei die Erfindung es erlaubt, gleichzeitig ein Wälzlager auf der Vorvakuumseite zu nutzen, ohne die im Stand der Technik erwähnten Nachteile dulden zu müssen.

Anhand der beigefügten Zeichnungen soll die Erfindung in Form zweier Ausführungsbeispiele beispielhaft erläutert und die Vorteile vertieft werden.
Es zeigen:

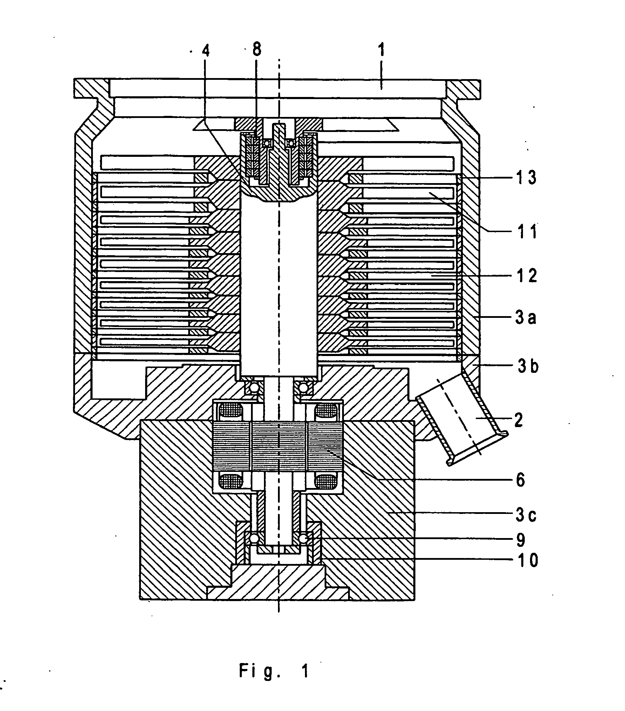

Fig. 1: Schnitt durch eine Turbomolekularvakuumpumpe.
Fig. 2:
   a) Schnitt durch die Anordnung in einer ersten Ausführungsform,
   b) Schnitt entlang A-A durch diese Ausführungsform.
Fig. 3: Schnitt durch eine zweite Ausführungsform der Anordnung.
Fig. 4: Perspektivische Darstellung der zweiten Ausführungsform.

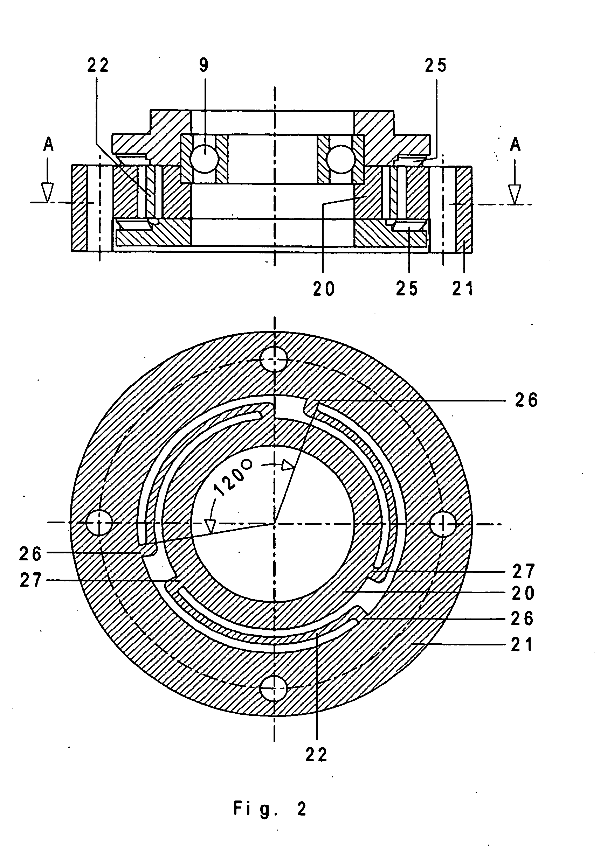

Die erste Abbildung zeigt eine Turbopumpe, in der eine erfindungsgemäße Anordnung vorteilhaft eingesetzt werden kann. Die Turbopumpe besitzt ein beispielhaft aus mehreren Teilen 3a, 3b, 3c zusammengesetztes Gehäuse mit Gaseinlass 1 und Gasauslass 2. In dem Gehäuse befinden sich Statorscheiben 12, die von Distanzringen 13 auf axialem Abstand zueinander gehalten werden. Auf einer Welle 4 sind Rotorscheiben 11 fixiert, die in die durch die Distanzringe geschaffenen Freiräume zwischen den Statorscheiben ragen. Rotor- und Statorscheiben sind mit Schaufeln versehen. Die Welle wird durch ein erstes, hochvakuumseitiges Lager 8 und ein zweites, vorvakuumseitiges Lager 9 drehbar unterstützt. Ein Antrieb 6 versetzt die Welle und damit die Rotorscheiben in schnelle Drehung, wodurch die Pumpwirkung der Scheiben hervorgerufen wird. Das Lager 8 ist als permanentmagnetisches Lager ausgebildet. Das vorvakuumseitige Lager 9 ist in einer Halterung 10 gefasst, die ihrerseits im Gehäuseteil 3c fixiert ist. Die Halterung ist in dieser Abbildung nur schematisch dargestellt und wird im folgenden Text und anhand der Abbildungen 2 bis 4 genauer erläutert.

Die zweite Abbildung zeigt eine erste erfindungsgemäße Ausführung der Halterung 10. Teil a) der Abbildung zeigt einen Schnitt entlang der Achse der Halterung. Das Wälzlager 9 ist als Kugellager ausgeführt und an der Schwingbühne 20 fixiert. Diese ist durch metallische Verbindungselemente 22 mit der Fixierung 21 verbunden. Die Verbindungselemente sind biegeweiche Stäbe, von denen mindestens drei über den Umfang verteilt angeordnet sind. Zwischen Fixierung und Schwingbühne sind Axialfedern 25 angeordnet, die als Wellfeder oder als Elastomerringe ausgebildet sein können. Dadurch wird die Steifigkeit der Halterung in axialer Richtung ist größer als die in radialer Richtung. Die Verwendung von Elastomerringen bringt eine bessere Wärmeabfuhr mit sich. In Teil b) der zweiten Abbildung ist dies gezeigt: Die Stäbe beginnen an der Fixierung an um 120° versetzten Startpunkten 26 und enden an gegenüber den Startpunkten in Umfangsrichtung versetzten Endpunkten 27 an der Schwingbühne. Über die Länge der Stäbe, ihre Dicke und die Ausformung der Start- und Endpunkte können die Biegeeigenschaften und damit die Schwingeigenschaften der Schwingbühne festgelegt werden. Die Stäbe verlaufen spiralförmig oder als Kreisbogenabschnitte zwischen Start- und Endpunkt.

Die Form der metallischen Verbindungselemente ermöglicht es der Schwingbühne, axiale und radiale Bewegungen auszuführen. Hierbei sind die Steifigkeiten in radialer und axialer Richtung unterschiedlich und durch die Geometrie der Stäbe und die Dimensionierung der Axialfedern auf die Anforderungen der Kombination aus erstem Lager 8 und zweitem Lager 9 abstimmbar. Insbesondere ist die axiale Steifigkeit der Halterung größer bemessen als die Steifigkeit des ersten, permanentmagnetischen Lagers. Eine Auslenkung des Rotors in axialer Richtung führt so nicht mehr zu einem Verlust der Schwingfähigkeit des Lagers 9 in axialer Richtung.

Die Abbildungen drei und vier zeigen eine zweite erfindungsgemäße Ausführung der Halterung 10. In dieser Ausführungsform besitzt die Halterung zwei Platten, von denen eine die Funktion der Schwingbühne 20 und eine die Funktion der Fixierung 21 übernimmt. Die metallischen Verbindungselemente zwischen beiden Platten sind aus zwei axial versetzten und koaxialen Zylindern 33 und 34 aufgebaut, welche mit drei Stegen untereinander und mit den Platten verbunden sind. Weiterhin sind Elastomerdämpfer 31 vorgesehen, die die Bewegung der Schwingbühne in radialer Richtung dämpfen. Für die axiale Bewegung sind Axialfeder 32 vorgesehen.

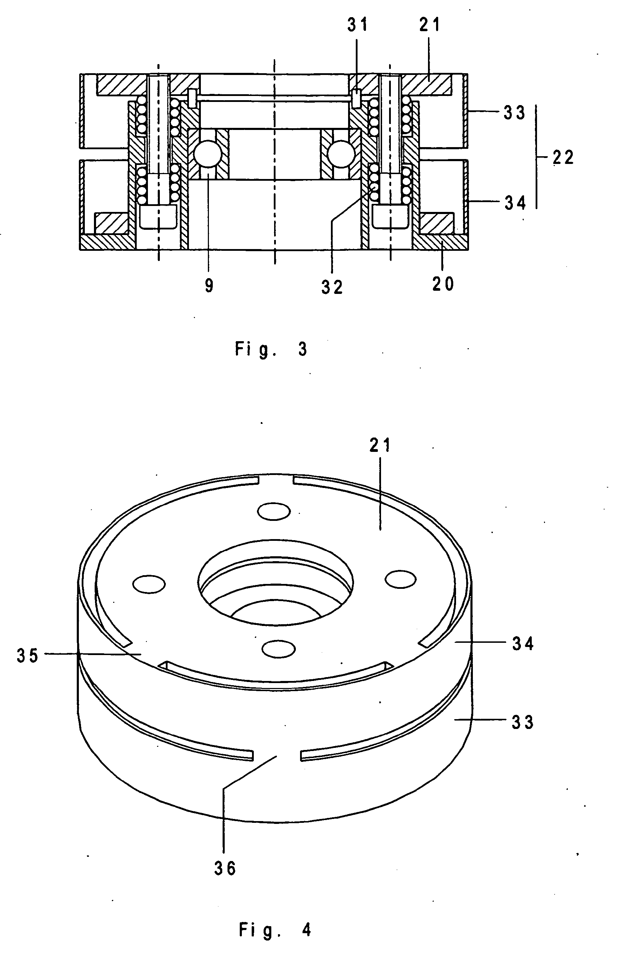

Die perspektivische Darstellung der Zylinder in Abbildung 4 verdeutlicht die Anordnung der Stege. Drei in Umfangrichtung äquidistant verteilte Radialstege 35 verbinden den Zylinder 34 mit der Fixierung 21. Eine Mehrzahl von über den Umfang verteilten Axialstegen 36 verbindet die Zylinder miteinander. Zur Verdeutlichung sind die Stege hier überproportional dargestellt. Durch die Verbindung über Axialstege können die beiden Zylinder radiale Bewegungen gegeneinander ausführen. Die Radialstege erlauben insbesondere axiale aber auch Kippbewegungen. Hierdurch sind die Bewegungseigenschaften in die verschiedenen Richtungen weitgehend voneinander entkoppelt und können durch Dimensionierung der Stege weitgehend getrennt voneinander beeinflusst werden. Dadurch, dass Axial- und Radialstege entlang der Umfangs versetzt voneinander angeordnet sind, wird der Verformungsspielraum der Halterung erhöht und eine Art kardanische Aufhängung realisiert.

## Patentansprüche

1. Anordnung zur Lagerung einer Welle (4) einer Vakuumpumpe mit einem Gehäuse (3a, 3b, 3c), mit einem ersten Lager (8), welches Kräfte in Richtung der Wellenachse erzeugt und eine axiale Steifigkeit besitzt, mit einem zweiten Lager (9), welches als Wälzlager ausgebildet ist und in einer Halterung (10) mit axialer und radialer Steifigkeit angeordnet ist, wobei die Halterung eine Schwingbühne (20) und eine Fixierung (21) umfasst, und die Schwingbühne über axiale und radiale Bewegungen der Schwingbühne erlaubende, metallische Verbindungselemente (22) mit der im Gehäuse gehalterten Fixierung verbunden ist, **dadurch gekennzeichnet, dass** zwischen Schwingbühne und Fixierung Axialfedern (25, 32) angeordnet sind, so dass die Steifigkeit der Halterung in axialer Richtung größer als die Steifigkeit der Halterung in radialer Richtung ist, wobei die axiale Steifigkeit der Halterung größer als die des ersten Lagers (8) ist.

2. Anordnung nach Anspruch 1, **dadurch gekennzeichnet, dass** Fixierung (21) und Schwingbühne (20) ringförmig und in einer Ebene angeordnet sind.

3. Anordnung nach Anspruch 1 oder 2, **dadurch gekennzeichnet, dass** die metallischen Verbindungselemente (22) mindestens drei biegeweiche und über den Umfang verteilte Stäbe sind.

4. Anordnung nach Anspruch 1, **dadurch gekennzeichnet, dass** Fixierung (21) und Schwingbühne (20) plattenförmig und axial versetzt angeordnet sind.

5. Anordnung nach Anspruch 4, **dadurch gekennzeichnet, dass** die metallischen Verbindungselemente (22) zwei axial versetzte, koaxiale Zylinder (33, 34) sind, die jeweils über mindestens drei Stege (35, 36) untereinander und mit den Platten verbunden sind.

6. Anordnung nach Anspruch 5, **dadurch gekennzeichnet, dass** die Stege zwischen den Zylindern (36) und die Stege zwischen Zylinder und Platte (35) in Umfangsrichtung versetzt zueinander angeordnet sind.

7. Anordnung nach Anspruch 1 bis 6, **dadurch gekennzeichnet, dass** das erste Lager (8) ein permanentmagnetisches Lager ist.

8. Anordnung nach Anspruch 1 bis 7, **dadurch gekennzeichnet, dass** die Anordnung zur Lagerung des Rotors einer Turbomolekularvakuumpumpe dient.

## Claims

1. Assembly for supporting a shaft (4) of a vacuum pump with a casing (3a, 3b, 3c), with a first bearing (8) which produces forces in the direction of the shaft axis and has axial stiffness, with a second bearing (9) which is formed as a rolling contact bearing and is disposed in a holder (10) having axial and radial stiffness, wherein the holder comprises an oscillating platform (20) and a fixing device (21) and the oscillating platform is connected by means of metallic connecting elements (22), which allow axial and radial movements of the oscillating platform, to the fixing device held in the casing, **characterised in that** axial springs (25, 32) are disposed between the oscillating platform and the fixing device, so that the stiffness of the holder in the axial direction is greater than the stiffness of the holder in the radial direction, wherein the axial stiffness of the holder is greater than that of the first bearing (8).

2. Assembly according to Claim 1, **characterised in that** the fixing device (21) and the oscillating platform (20) are annular and disposed in one plane.

3. Assembly according to Claim 1 or 2, **characterised in that** the metallic connecting elements (22) are at least three flexible rods which are distributed over the circumference.

4. Assembly according to Claim 1, **characterised in that** the fixing device (21) and the oscillating platform (20) are plate like and disposed in an axially displaced manner.

5. Assembly according to Claim 4, **characterised in that** the metallic connecting elements (22) are two axially displaced, coaxial cylinders (33, 34) which are in each case connected together and to the plates by means of at least three webs (35, 36).

6. Assembly according to Claim 5, **characterised in that** the webs between the cylinders (36) and the webs between the cylinder and the plate (35) are displaced relative to one another in the circumferential direction.

7. Assembly according to Claims 1 to 6, **characterised in that** the first bearing (8) is a permanent magnet bearing.

8. Assembly according to Claims 1 to 7, **characterised in that** the assembly serves to support the rotor of a turbomolecular vacuum pump.

## Revendications

1. Agencement destiné à supporter un arbre (4) d'une pompe à vide comprenant un carter (3a, 3b, 3c), un premier palier (8) ayant une certaine raideur axiale et générant des forces dans le sens axial de l'arbre et un second palier (9) configuré en palier à roulement et monté dans un dispositif de support (10) ayant une certaine raideur axiale et radiale, agencement dans lequel le dispositif de support (10) comporte un plateau oscillant (20) et une fixation (21), ledit plateau oscillant (20) étant relié à la fixation montée dans le carter par le biais d'éléments métalliques de liaison (22) permettant au plateau oscillant de se déplacer dans le sens axial et radial, **caractérisé en ce que** des ressorts axiaux (25, 32) sont disposés entre le plateau oscillant et la fixation, de telle sorte que la raideur de la fixation est plus grande dans le sens axial que dans le sens radial, et que cette raideur axiale de la fixation est supérieure à celle du premier palier (8).

2. Agencement selon la revendication 1, **caractérisé en ce que** la fixation (21) et le plateau oscillant (20) sont en forme d'anneau et disposés sur un même plan.

3. Agencement selon la revendication 1 ou 2, **caractérisé en ce que** les éléments métalliques de liaison (22) sont au moins trois barres souples en flexion réparties sur la circonférence.

4. Agencement selon la revendication 1, **caractérisé en ce que** la fixation (21) et le plateau oscillant (20) sont en forme de disque et décalés dans le sens axial.

5. Agencement selon la revendication 4, **caractérisé en ce que** les éléments métalliques de liaison (22) sont deux cylindres (33, 34) coaxiaux décalés dans le sens axial et reliés entre eux et aux disques par le biais chaque fois d'au moins trois entretoises (35, 36).

6. Agencement selon la revendication 5, **caractérisé en ce que** les entretoises (36) entre cylindres et les entretoises (35) entre un cylindre et un disque sont décalées les unes par rapport aux autres dans le sens circonférentiel.

7. Agencement selon l'une quelconque des revendications 1 à 6, **caractérisé en ce que** le premier palier (8) est un palier à aimant permanent.

8. Agencement selon l'une quelconque des revendications 1 à 7, **caractérisé en ce que** l'agencement est destiné à supporter le rotor d'une pompe à vide turbomoléculaire.
